# EUROPÄISCHE PATENTSCHRIFT

(11) **EP 3 372 758 B1**
(45) Veröffentlichungstag und Bekanntmachung des Hinweises auf die Patenterteilung: **19.06.2019**
(21) Anmeldenummer: 18154128.5
(22) Anmeldetag: 30.01.2018
(51) Int. Cl.: E05B 19/00, E05B 19/04

(54) **KRAFTFAHRZEUGSCHLÜSSEL**
MOTOR VEHICLE KEY
CLÉ DE VÉHICULE AUTOMOBILE

(30) Priorität: 08.03.2017 DE 102017002122
(43) Veröffentlichungstag der Anmeldung: 12.09.2018
(73) Patentinhaber: Huf Hülsbeck & Fürst GmbH & Co. KG, 42551 Velbert (DE)
(72) Erfinder: Michel, Andre, 42349 Wuppertal (DE)

(56) Entgegenhaltungen:
- EP-A1- 0 761 914
- EP-A1- 1 350 910
- DE-A1-102008 005 840
- US-A1- 2015 047 399

## Beschreibung

Die Erfindung betrifft einen Kraftfahrzeugschlüssel, insbesondere für einen Kraftfahrzeugfunkschlüssel, aufweisend einen Schlüsselschaft und ein Lagerelement, wobei der Schlüsselschaft innerhalb des Lagerelements angeordnet ist und zwischen dem Lagerelement und dem Schlüsselschaft ein Verformungselement, insbesondere ein Kunststoffelement, angeordnet ist, welches nachträglich verformbar ausgebildet ist. Die Erfindung betrifft ebenfalls ein Verfahren gemäß dem unabhängigen Patentanspruch 16.

Aus dem Stand der Technik ist ein Kraftfahrzeugschlüssel für einen Kraftfahrzeugfunkschlüssel bekannt. Der Kraftfahrzeugschlüssel weist einen Schlüsselschaft und ein als Kappenelement ausgebildetes Lagerelement auf. Der Schlüsselschaft wird mit dem Lagerelement mittels eines Stifts verstiftet, so dass der Schlüsselschaft mit dem Lagerelement fest verbunden ist. Dabei sind Toleranzabweichungen, insbesondere bei dem Lagerelement, dem Stift und dem Schlüsselschaft unvermeidbar. Dies kann zu einem erhöhten Ausschuss dieser Bauteile führen.

Die Dokumente EP1350910A1, DE102008005840A1, US2015/047399A1 offenbaren gattungsgemäßen Kraftfahrzeugschlüssel, wobei die Befestigung des Schlüsselschafts mit dem Lagerelement mittels eines metallischen Verformungselements erfolgt. Weiterhin offenbart EP0761914A1 einen Kraftfahrzeugschlüssel mit einem am Schlüsselschaft angespritzten Lagerelement aus Kunststoff. Dieses Befestigungsverfahren hat den Nachteil, dass dieses nicht für ein metallisches Lagerelement geeignet ist.

Es ist daher die Aufgabe der Erfindung, die Herstellungskosten für einen Kraftfahrzeugschlüssel zu verringern.

Die Aufgabe wird gelöst durch den kennzeichnenden Teil des Patentanspruchs 1. Es ist dabei vorgesehen, dass das Lagerelement mindestens eine Lagerausnehmung aufweist, und der Schlüsselschaft mindestens eine Schlüsselschaftausnehmung aufweist, wobei nach der Verformung des Verformungselements, das verformte Verformungselement zumindest teilweise innerhalb der Lagerausnehmung und zumindest teilweise innerhalb der Schlüsselschaftausnehmung angeordnet ist und den Schlüsselschaft und das Lagerelement kraft- und/oder formschlüssig verbindet. Aufgrund dieser vorteilhaften Maßnahme wird der Herstellungsprozess des Kraftfahrzeugschlüssels vereinfacht, weil im Vergleich zum Stand der Technik der Toleranzeinfluss der Bauteile zueinander minimiert wird, so dass folglich die Herstellungskosten für den Kraftfahrzeugschlüssel gesenkt werden können. Das Verformungselement ist als Kunststoffelement ausgebildet. Es muss lediglich sichergestellt werden, dass die Schmelztemperatur des Verformungselements niedriger ist, als die Schmelztemperatur des Materials des Schlüsselschafts und des Lagerelements. Für die vorliegende Erfindung ist das Verformungselement aus Kunststoff ausgebildet. Das verformte Material des Verformungselements, insbesondere der verformte Kunststoff des Kunststoffelements, dringt in die Lagerausnehmung und die Schlüsselschaftausnehmung ein und verbindet den Schlüsselschaft fest und sicher mit dem Lagerelement. Die Schlüsselschaftausnehmung und die Lagerausnehmung werden durch das verformte Verformungselement, insbesondere Kunststoffelement, so fest und sicher miteinander verbunden, so dass mit dem Schlüsselschaft problemlos ein dem Kraftfahrzeug zugeordneter Schließzylinder zuverlässig betätigt werden kann.

Um sicherzustellen, dass der verformte Kunststoff auch in die Lagerausnehmung und die Schlüsselschaftausnehmung eindringt, kann vorgesehen sein, dass das Lagerelement eine Wanne zur Anordnung des Verformungselements aufweist. Die Wanne sorgt dafür, dass bei einer Änderung des Aggregatzustands des zu verformenden Materials, insbesondere des Kunststoffs, auch dieses in dem Lagerelement, insbesondere in der Wanne verbleibt und somit zur Verfügung steht, um in die Lagerausnehmung und die Schlüsselschaftausnehmung zu strömen. Mit Hilfe der Wanne wird somit sichergestellt, dass der Schlüsselschaft fest und sicher mit dem Lagerelement verbunden werden kann.

Die feste und sichere Verbindung zwischen dem Schlüsselschaft und dem Lagerelement kann weiter verbessert werden, wenn das Lagerelement eine erste Lagerausnehmung und eine zweite Lagerausnehmung aufweist, welche innerhalb der Wanne, vorzugsweise gegenüberliegend und/oder nebeneinander, zueinander angeordnet sind. Es kann sogar in Abhängigkeit von den Anforderungen des Kraftfahrzeugschlüssels Sinn machen, die Anzahl der Lagerausnehmung auf bis zu sechs Lagerausnehmungen zu erhöhen, und die Anzahl der Schlüsselschaftausnehmungen auf bis zu vier Schlüsselschaftausnehmungen zu erhöhen.

Sehr einfach kann die Konstruktion des Kraftfahrzeugschlüssels ausgebildet werden, wenn das Verformungselement im Querschnitt als U-Profil ausgebildet ist, wobei das U-Profil einen ersten Schenkel und einen zweiten Schenkel umfasst, die einen Abstand a1 zueinander aufweisen. Das U-Profil weist den Vorteil auf, dass der Schlüsselschaft, insbesondere ein Verbindungsende des Schlüsselschafts, zur Verarbeitung des Verformungselements darin sicher und fest aufgenommen werden kann. Dabei kann es sich dann anbieten, wenn das Verformungselement als Behälter ausgebildet ist. Der Behälter ist im Wesentlichen topfförmig ausgebildet und weist eine umschlossene Seitenwand auf. Wenn das Verformungselement verarbeitet wird, wird die umschlossene Seitenwand im Wesentlichen gleichmäßig in dem Lagerelement, insbesondere in der Wanne des Lagerelements verteilt. Dies führt dazu, dass die Lagerausnehmung und die Schlüsselschaftausnehmung zuverlässig mit dem verformten Material, insbesondere mit dem verformten Kunststoff, befüllbar sind.

Die Montage des Verformungselements in das Lagerelement kann vereinfacht werden, wenn das Verformungselement als Einlegeteil ausgebildet ist. Eine Maschine oder ein Werker an der Montagelinie greift das Verformungselement und legt dieses in das Lagerelement, insbesondere in die Wanne des Lagerelements ein. Dabei sollte beachtet werden, dass das Verformungselement in seinem unverformten Zustand eine Gesamtbreite a2 aufweist und das Lagerelement, insbesondere die Wanne, eine Breite b1 aufweist, wobei die Breite b1 des Lagerelements kleiner/gleich als die Gesamtbreite a2 des unverformten Verformungselements ausgebildet ist. Damit wird sichergestellt, dass sich das Verformungselement sicher und einfach in das Lagerelement montieren lässt. Wenn die Breite b1 des Lagerelements gleich der Gesamtbreite a2 des Verformungselements ist, dann muss das Verformungselement in das Lagerelement hineingedrückt werden. In diesem Fall handelt es sich zwischen dem Lagerelement und dem Verformungselement um eine Presspassung, die dafür sorgt, dass das Verformungselement sicher und fest innerhalb des Lagerelements, insbesondere in der Wanne, angeordnet ist. Dies ist besonders vorteilhaft bei der weiteren Verarbeitung des Verformungselements, weil der Schlüsselschaft präzise mit dem Verformungselement koppelbar ist bzw. form- und/oder kraftschlüssig verbunden werden kann.

Um bereits frühzeitig bei der Herstellung des Kraftfahrzeugschlüssels einen Kontakt zwischen dem Schlüsselschaft und dem Verformungselement herzustellen, kann vorgesehen sein, dass der Schlüsselschaft, insbesondere an einem Verbindungsende, eine Breite c1 aufweist, wobei die Breite c1 des Schlüsselschafts größer als die Breite a1 der zueinander beabstandeten Schenkel des U-Profils des Verformungselements ausgebildet ist. Somit wird frühzeitig bei der Verarbeitung des Verformungselements, insbesondere um den Aggregatzustand des Verformungselements von Beginn an zu verändern, gesorgt, dass das zu verformende Material, insbesondere der Kunststoff, in die Lagerausnehmung und die Schlüsselschaftausnehmung gelangt.

Eine zuverlässige Verformung des Kunststoffelements kann sichergestellt werden, wenn die Verformung des Kunststoffelements mittels einer Sonotrode zur Erzeugung von Ultraschallwellen durchführbar ist, wobei die Sonotrode vorzugsweise mit dem Schlüsselschaft, insbesondere mit einem Ende des Schlüsselschafts, koppelbar ist. Der Schlüsselschaft wird durch die Sonotrode zu einer Schwingung angeregt. Dazu wird die Sonotrode mit dem Schlüsselschaft gekoppelt. Wenn das Verbindungsende mit dem Kunststoffelement in Kontakt kommt, entstehen Reibungskräfte, durch die Wärme am Kunststoffelement erzeugt wird. Diese Wärme sorgt dafür, dass der Kunststoff beginnt, sich zu verformen. Der verformte Kunststoff strömt danach in die Lagerausnehmung und die Schlüsselschaftausnehmung. Anschließend kann die Sonotrode vom Schlüsselschaft entfernt werden und der Kunststoff härtet aus, so dass der Schlüsselschaft fest mit dem Lagerelement verbunden ist.

Die Verbindung zwischen dem Lagerelement und dem Schlüsselschaft kann noch zuverlässiger ausgebildet werden, wenn die Lagerausnehmung U-förmig ausgebildet ist. Die U-förmig ausgebildeten Lagerausnehmungen können das verformte Material, insbesondere den verformten Kunststoff, gut aufnehmen, ohne dass Lufteinschlüsse innerhalb der Lagerausnehmung entstehen. Dies erhöht die Stabilität der Verbindung zwischen dem Schlüsselschaft und dem Lagerelement.

Um das Verformungselement, insbesondere das Kunststoffelement, gut verformen zu können, kann vorgesehen sein, dass der Schlüsselschaft aus Metall, vorzugsweise aus Stahl oder Neusilber, ausgebildet ist. Die feste Verbindung zwischen dem Schlüsselschaft und dem Lagerelement kann sichergestellt werden, wenn das Kunststoffelement aus Polyamid ausgebildet ist. Eine Beschädigung des Lagerelements während des Verformens des Kunststoffelements kann gewährleistet werden, wenn das Lagerelement aus Metall, vorzugsweise aus Druckguss, ausgebildet ist.

Um den Komfort für den Benutzer zu erhöhen, kann gemäß einer bevorzugten Ausführung des Kraftfahrzeugschlüssels vorgesehen sein, dass der Kraftfahrzeugschlüssel als Notschlüssel ausgebildet ist und zur Anordnung in dem Kraftfahrzeugfunkschlüssel ausgebildet ist. Dabei kann das Lagerelement als Kappenelement und/oder als Betätigungselement für den Kraftfahrzeugfunkschlüssel ausgebildet sein.

Des Weiteren wird die Aufgabe gelöst durch das Verfahren gemäß Patentanspruch 16.

Das erfindungsgemäße Verfahren zum Herstellen eines Kraftfahrzeugschlüssels ist gekennzeichnet durch die folgenden Verfahrensschritte:
a) Einlegen eines, insbesondere im Querschnitt U-förmig ausgebildeten, Verformungselements, wobei das Verformungselement aus Kunsstoff ausgebildet ist, in ein Lagerelement aufweisend mindestens eine Lagerausnehmung,
b) Koppeln einer Sonotrode zur Erzeugung von Ultraschallwellen mit einem Schlüsselschaft aufweisend mindestens eine Schlüsselschaftausnehmung,
c) Hineinführen des Schlüsselschafts in das Verformungselement,
d) Schwingungsanregung des Schlüsselschafts durch die Sonotrode,
e) Verformen des Verformungselements durch den schwingenden Schlüsselschaft in die Schlüsselschaftausnehmung und in die Lagerausnehmung zur Herstellung einer kraft- und/oder formschlüssigen Verbindung zwischen dem Lagerelement und dem Schlüsselschaft,
f) Abkühlen und Verfestigen des verformten Verformungselements zur Herstellung einer kraft- und/oder formschlüssigen Verbindung zwischen dem Lagerelement und dem Schlüsselschaft.

Der erfindungsgemäße Kraftfahrzeugschlüssel wird anhand eines Ausführungsbeispiels näher beschrieben. Die Figuren zeigen:
- Figur 1: einen erfindungsgemäßen Kraftfahrzeugschlüssel, bei welchem ein Schlüsselschaft mit einem Lagerelement verbunden ist,
- Figur 2: einen Ausschnitt A des Kraftfahrzeugschlüssels vor dem Verbinden des Schlüsselschafts mit dem Lagerelement, und
- Figur 3: den Ausschnitt A des Kraftfahrzeugschlüssels nach dem Verbinden des Schlüsselschafts mit dem Lagerelement.

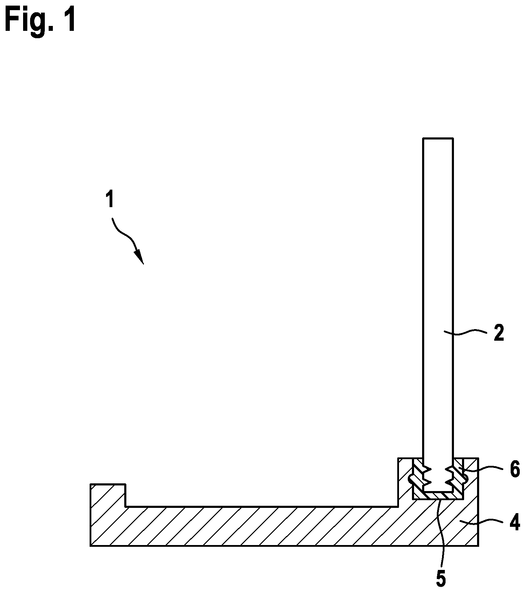

In der Figur 1 ist ein Kraftfahrzeugschlüssel 1 für einen nicht näher dargestellten Kraftfahrzeugfunkschlüssel gezeigt. Der Kraftfahrzeugschlüssel 1 kann als Notschlüssel für den Kraftfahrzeugfunkschlüssel dienen, wenn der Kraftfahrzeugfunkschlüssel beispielsweise aufgrund fehlender Energie unbedienbar ist. Dabei kann der Kraftfahrzeugschlüssel 1 am oder im Kraftfahrzeugfunkschlüssel angeordnet werden.

Der Kraftfahrzeugschlüssel 1 umfasst einen aus Metall, insbesondere aus Stahl oder Neusilber, ausgebildeten Schlüsselschaft 2, der zum Bedienen eines Kraftfahrzeugschließzylinders ausgebildet ist. Der Schlüsselschaft 2 umfasst ein Verbindungsende 3, welches eine Breite c1 aufweist. Der Schlüsselschaft 2 ist innerhalb eines Lagerelements 4 angeordnet. Das Lagerelement 4 ist aus Metall, insbesondere aus Druckguss, ausgebildet, wobei im vorliegenden Fall dieses zusätzlich noch als Kappenelement und/oder Betätigungselement ausgestaltet ist. Das Lagerelement 4 kann dann beispielsweise eine Öffnung eines Gehäuses des Kraftfahrzeugfunkschlüssels abdecken. Zusätzlich kann ein Benutzer beim Bedienen des Kraftfahrzeugschließzylinders das Lagerelement 4 benutzen, um mit Hilfe des Schlüsselschaftes 2 den Schließzylinder zu bedienen. Dabei greift der Benutzer beispielsweise mit seinem Daumen und seinem Zeigefinger das Lagerelement 4 an, so dass dieses dann als Betätigungselement verwendbar ist.

Das Lagerelement 4 weist eine Wanne 5 mit einer Breite b1 auf, welche zur Anordnung eines Verformungselements 6 vorgesehen ist. Dabei ist das Verformungselement 6 aus einem Kunststoffelement 6 ausgebildet, welches nachträglich verformbar ist. Das Kunststoffelement 6 umfasst im vorliegenden Ausführungsbeispiel den Werkstoff Polyamid. Ferner kann das Kunststoffelement 6 als Einlegteil ausgestaltet sein und kann in das Lagerelement 4, insbesondere in die Wanne 5, eingelegt werden. Ein Hineindrücken des Kunststoffelements 6 in das Lagerelement 4 ist ebenfalls denkbar.

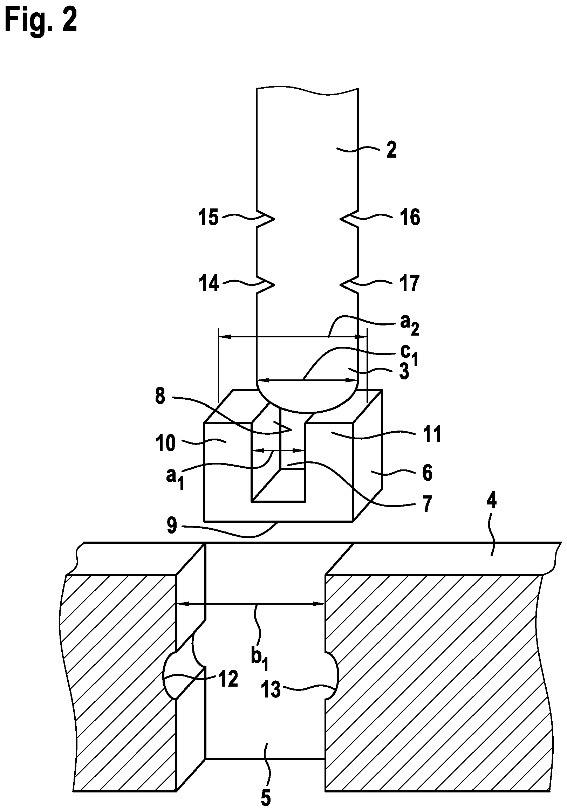

Des Weiteren ist das Kunststoffelement 6 als Behälter 7 ausgebildet, welcher vorzugsweise eine umlaufende Wandung 8 umfasst. In der Figur 2 ist das Kunststoffelement 6 in seinem unverformten Zustand visualisiert, wobei das Kunststoffelement 6 im Querschnitt als U-Profil 9 ausgebildet ist, wobei das U-Profil 9 einen ersten Schenkel 10 und einen zweiten Schenkel 11 umfasst, die einen Abstand a1 zueinander aufweisen. Des Weiteren erkennt man in der Figur 2, dass das Kunststoffelement 6 in seinem unverformten Zustand eine Gesamtbreite a2 aufweist. Die Figur 2 offenbart weiter, dass das Lagerelement 3 mit einer ersten, vorzugsweise U-förmig ausgebildeten, Lagerausnehmung 12 und mit einer zweiten, vorzugsweise U-förmig, ausgebildeten Lagerausnehmung 13 versehen ist, welche innerhalb der Wanne 4 gegenüberliegend zueinander angeordnet sind. Des Weiteren zeigt die Figur 2, dass am Schlüsselschaft vier Schlüsselschaftausnehmung 14, 15, 16, 17 vorgesehen sind.

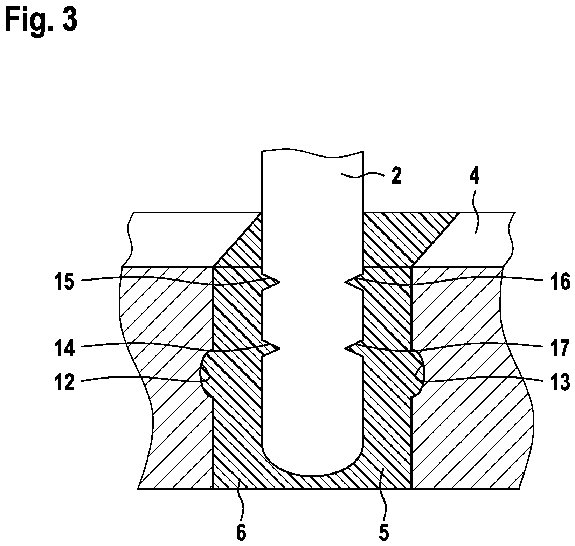

Im Ergebnis ist im unverformten Zustand des Kunststoffelements 6 die Breite b1 des Lagerelements 4 kleiner/gleich als die Gesamtbreite b2 des unverformten Kunststoffelements 6 und die Breite c1 des Schlüsselschaftes 2, insbesondere des Verbindungsendes 3 des Schlüsselschafts 2, ist größer als die Breite a1 der zueinander beabstandeten Schenkel 10, 11 des U-Profils des Kunststoffelements 6. Nach der Verformung des Kunststoffelements 6 mittels einer nicht näher dargestellten Sonotrode zur Erzeugung von Ultraschallwellen, welche mit dem Schlüsselschaft 2, insbesondere mit einem nicht gezeigten Ende des Schlüsselschafts 2 koppelbar ist, ist das verformte Kunststoffelement 6 in den Lagerausnehmung 13,14 und in den Schlüsselschaftausnehmungen 14, 15, 16, 17 angeordnet, wie dies in der Figur 3 gezeigt ist. Im Endergebnis sind der Schlüsselschaft 2 und das Lagerelement 4 kraft- und/oder formschlüssig miteinander verbunden.

Im Folgenden wird der Verfahrensablauf zur Herstellung des Kraftfahrzeugschlüssels 1 offenbart, insbesondere zur Verbindung des Schlüsselschafts 2 mit dem Lagerelement 4.

Dabei wird zunächst das Kunststoffelement 6 in das Lagerelement 4, insbesondere in die Wanne 5 eingelegt oder hineingedrückt. Wenn die Gesamtbreite a2 des unverformten Kunststoffelements 6 gleich der Breite b1 des Lagerelements 4 ist, muss das Kunststoffelement 6 in die Wanne 5 hineingedrückt werden. In diesem Fall handelt es sich um eine Presspassung zwischen dem Kunststoffelement 6 und dem Lagerelement 4, insbesondere der Wanne 4. Falls die die Gesamtbreite a2 des unverformten Kunststoffelements 6 kleiner der Breite b1 des Lagerelements 4 ist, dann kann das Kunststoffelement 6 ohne Widerstand in die Wanne 4 hineingelegt werden. Die Presspassung zwischen dem Kunststoffelement 6 und dem Lagerelement 4 bietet allerdings den Vorteil, dass bei der weiteren Verformung des Kunststoffelements 6 dieses unbeweglich in der Wanne 5 verbleiben kann. Vor dem Anordnen des Kunststoffelements 6 in die Wanne 5 oder aber auch danach wird der Schlüsselschaft 2 mit der Sonotrode gekoppelt. Dabei kann die Sonotrode den Schlüsselschaft 2 berühren oder an diesem befestigt werden. Wie bereits oben beschrieben, kann man mit der Sonotrode Ultraschallwellen erzeugen, welche den Schlüsselschaft 2 in Schwingung versetzen. Wenn der Schlüsselschaft 2 in das Kunststoffelement 6, insbesondere in den Behälter 7, hineingeführt wird, überträgt sich die Schwingung des Schlüsselschafts 2 auf das Kunststoffelement 6. Dies passiert sehr frühzeitig, weil die Breite c1 des Verbindungsendes 3 des Schlüsselschafts 2 größer ist, als der Abstand a1 der Schenkel 10, 11. Dabei wird Reibung zwischen dem Schlüsselschaft 2 und dem Kunststoffelement 6 erzeugt. Durch die Reibung wird Wärme erzeugt, die das Kunststoffelement 6 verformt. Bei der Verformung des Kunststoffelements strömt der verformte Kunststoff des Kunststoffelements 6 in die Schlüsselschaftausnehmungen 14, 15, 16, 17 und in die Lagerausnehmungen 13, 14, so dass ein eine kraft- und/oder formschlüssige Verbindung zwischen dem Schlüsselschaft 2 und dem Lagerelement 4 hergestellt wird, wie dies in der Figur 3 visualisiert ist. Nach dem Abkühlen und Verfestigen des verformten Kunststoffelements 6 ist der Schlüsselschaft 2 sicher und zuverlässig mit dem Lagerelement 4 verbunden.

Andere Ausgestaltungen des Kraftfahrzeugschlüssel 1 sind möglich, so dass auch bis zu sechs Lagerausnehmungen in dem Lagerelement, insbesondere in der Wanne 4, angeordnet sein können. Diese Lagerausnehmungen können auch nebeneinander und/oder gegenüberliegend zueinander angeordnet sein.

Es muss lediglich sichergestellt werden, dass die Schmelztemperatur des Verformungselements niedriger ist, als die Schmelztemperatur des Materials des Schlüsselschafts und des Lagerelements.

### Bezugszeichenliste

- 1: Kraftfahrzeugschlüssel
- 2: Schlüsselschaft
- 3: Verbindungsende
- 4: Lagerelement
- 5: Wanne
- 6: Verformungselement; Kunststoffelement
- 7: Behälter
- 8: Wandung
- 9: U-Profil
- 10: erster Schenkel des U-Profils
- 11: zweiter Schenkel des U-Profils
- 12: erste Lagerausnehmung
- 13: zweite Lagerausnehmung
- 14: erste Schlüsselschaftausnehmung
- 15: zweite Schlüsselschaftausnehmung
- 16: dritte Schlüsselschaftausnehmung
- 17: vierte Schlüsselschaftausnehmung

## Patentansprüche

1. Kraftfahrzeugschlüssel (1), insbesondere für einen Kraftfahrzeugfunkschlüssel, aufweisend einen Schlüsselschaft (2) und ein Lagerelement (4), wobei der Schlüsselschaft (2) innerhalb des Lagerelements (2) angeordnet ist und zwischen dem Lagerelement (4) und dem Schlüsselschaft (2) ein Verformungselement (6) angeordnet ist, welches nachträglich verformbar ausgebildet ist,
wobei das Lagerelement (4) mindestens eine Lagerausnehmung (12, 13) aufweist, und der Schlüsselschaft (2) mindestens eine Schlüsselschaftausnehmung (14, 15, 16, 17) aufweist, wobei nach der Verformung des Verformungselements, das verformte Verformungselement (6) zumindest teilweise innerhalb der Lagerausnehmung (12, 13) und zumindest teilweise innerhalb der Schlüsselschaftausnehmung (14, 15, 16, 17) angeordnet ist und den Schlüsselschaft (2) und das Lagerelement (4) kraft- und/oder formschlüssig verbindet, **dadurch gekennzeichnet, dass** das Verformungselement (6) aus Kunststoff ausgebildet ist.

2. Kraftfahrzeugschlüssel (1) nach Anspruch 1, **dadurch gekennzeichnet, dass** das Lagerelement (4) eine Wanne (5) zur Anordnung des Verformungselement (6) aufweist.

3. Kraftfahrzeugschlüssel (1) nach Anspruch 2, **dadurch gekennzeichnet, dass** das Lagerelement (4) eine erste Lagerausnehmung (12) und eine zweite Lagerausnehmung (13) aufweist, welche innerhalb der Wanne (5), vorzugsweise gegenüberliegend und/oder nebeneinander, zueinander angeordnet sind.

4. Kraftfahrzeugschlüssel (1) nach mindestens einem der Ansprüche 1 bis 3, **dadurch gekennzeichnet, dass** das Verformungselement (6) im Querschnitt als U-Profil (9) ausgebildet ist, wobei das U-Profil (9) einen ersten Schenkel (10) und einen zweiten Schenkel (11) umfasst, die einen Abstand a1 zueinander aufweisen.

5. Kraftfahrzeugschlüssel (1) nach mindestens einem der Ansprüche 1 bis 4, **dadurch gekennzeichnet, dass** das Verformungselement (6) als Behälter (7) ausgebildet ist.

6. Kraftfahrzeugschlüssel (1) nach mindestens einem der Ansprüche 1 bis 5, **dadurch gekennzeichnet, dass** Verformungselement (6) als Einlegeteil ausgebildet ist.

7. Kraftfahrzeugschlüssel (1) nach mindestens einem der Ansprüche 1 bis 6, **dadurch gekennzeichnet, dass** das Verformungselement (6) in seinem unverformten Zustand eine Gesamtbreite a2 aufweist und das Lagerelement (4), insbesondere die Wanne (5), eine Breite b1 aufweist, wobei die Breite b1 des Lagerelements (4) kleiner/gleich als die Gesamtbreite a2 des unverformten Verformungselements (6) ausgebildet ist.

8. Kraftfahrzeugschlüssel (1) nach mindestens einem der Ansprüche 1 bis 7, **dadurch gekennzeichnet, dass** der Schlüsselschaft (2), insbesondere an einem Verbindungsende (3), eine Breite c1 aufweist, wobei die Breite c1 des Schlüsselschafts (2) größer als die Breite a1 der zueinander beabstandeten Schenkel (10, 11) des U-Profils des Verformungselements (6) ausgebildet ist.

9. Kraftfahrzeugschlüssel (1) nach mindestens einem der Ansprüche 1 bis 8, **dadurch gekennzeichnet, dass** die Verformung des Verformungselements (6) mittels einer Sonotrode zur Erzeugung von Ultraschallwellen durchführbar ist, wobei die Sonotrode vorzugsweise mit dem Schlüsselschaft (2), insbesondere mit einem Ende des Schlüsselschafts (2), koppelbar ist.

10. Kraftfahrzeugschlüssel (1) nach mindestens einem der Ansprüche 1 bis 9, **dadurch gekennzeichnet, dass** die Lagerausnehmung (12, 13) U-förmig ausgebildet ist.

11. Kraftfahrzeugschlüssel (1) nach mindestens einem der Ansprüche 1 bis 10, **dadurch gekennzeichnet, dass** der Schlüsselschaft (2) aus Metall, vorzugsweise aus Stahl oder Neusilber, ausgebildet ist.

12. Kraftfahrzeugschlüssel (1) nach mindestens einem der Ansprüche 1 bis 11, **dadurch gekennzeichnet, dass** das Lagerelement (4) aus Metall, vorzugsweise aus Druckguss, ausgebildet ist.

13. Kraftfahrzeugschlüssel (1) nach mindestens einem der Ansprüche 1 bis 12, **dadurch gekennzeichnet, dass** das Kunststoffelement (6) aus Polyamid ausgebildet ist

14. Kraftfahrzeugschlüssel (1) nach mindestens einem der Ansprüche 1 bis 13, **dadurch gekennzeichnet, dass** der Kraftfahrzeugschlüssel (1) als Notschlüssel ausgebildet ist und zur Anordnung in dem Kraftfahrzeugfunkschlüssel ausgebildet ist.

15. Kraftfahrzeugschlüssel (1) nach mindestens einem der Ansprüche 1 bis 14, **dadurch gekennzeichnet, dass** das Lagerelement (4) als Kappenelement und/oder als Betätigungselement für den Kraftfahrzeugfunkschlüssel ausgebildet ist.

16. Verfahren zum Herstellen eines Kraftfahrzeugschlüssels (1), **gekennzeichnet durch** die folgenden Verfahrensschritte:
a) Einlegen eines, insbesondere im Querschnitt U-förmig ausgebildeten Verformungselement (6), wobei das Verformungselement (6) aus Kunststoff ausgebildet ist, in ein Lagerelement (4) aufweisend mindestens eine Lagerausnehmung (12, 13),
b) Koppeln einer Sonotrode zur Erzeugung von Ultraschallwellen mit einem Schlüsselschaft (2) aufweisend mindestens eine Schlüsselschaftausnehmung (14, 15, 16, 17),
c) Hineinführen des Schlüsselschafts (2) in das Verformungselement (6),
d) Schwingungsanregung des Schlüsselschafts (2) durch die Sonotrode,
e) Verformen des Verformungselement (6) durch den schwingenden Schlüsselschaft (2) in die Schlüsselschaftausnehmung (14, 15, 16, 17) und in die Lagerausnehmung (12, 13) zur Herstellung einer kraft- und/oder formschlüssigen Verbindung zwischen dem Lagerelement (4) und dem Schlüsselschaft (2),
f) Abkühlen und Verfestigen des verformten Verformungselement (6) zur Herstellung einer kraft- und/oder formschlüssigen Verbindung zwischen dem Lagerelement (4) und dem Schlüsselschaft (2).

17. Verfahren nach Anspruch 16, **gekennzeichnet durch** einen Kraftfahrzeugschlüssel (1) nach einem der Ansprüche 1 bis 15.

## Claims

1. A motor vehicle key (1), in particular for a motor vehicle radio key, having a key shank (2) and a mounting element (4), wherein the key shank (2) is arranged inside the mounting element (2), and a deformation element (6) is arranged between the mounting element (4) and the key shank (2), which deformation element (6) is designed to be subsequently deformable,
wherein the mounting element (4) has at least one mounting recess (12, 13), and the key shank (2) has at least one key shank recess (14, 15, 16, 17), wherein after the deformation of the deformation element, the deformed deformation element (6) is arranged at least partially inside the mounting recess (12, 13), and at least partially inside the key shank recess (14, 15, 16, 17), and connects the key shank (2) and the mounting element (4) in a force fit and/or a form fit, **characterised in that**, the deformation element (6) is formed from plastic.

2. The motor vehicle key (1) in accordance with claim 1, **characterised in that**, the mounting element (4) has a well (5) for the arrangement of the deformation element (6).

3. The motor vehicle key (1) in accordance with claim 2, **characterised in that**, the mounting element (4) has a first mounting recess (12) and a second mounting recess (13), which are arranged relative to one another inside the well (5), preferably opposite one another and/or next to one another.

4. The motor vehicle key (1) in accordance with one of the claims 1 to 3, **characterised in that**, the deformation element (6) in cross-section is formed as a U-profile (9), wherein the U-profile (9) comprises a first leg (10) and a second leg (11), which are spaced apart by a distance a1.

5. The motor vehicle key (1) in accordance with one of the claims 1 to 4, **characterised in that**, the deformation element (6) is formed as a container (7) .

6. The motor vehicle key (1) in accordance with one of the claims 1 to 5, **characterised in that**, the deformation element (6) is formed as an insert.

7. The motor vehicle key (1) in accordance with one of the claims 1 to 6, **characterised in that**, the deformation element (6) in its undeformed state has an overall width a2, and the mounting element (4), in particular the well (5), has a width b1, wherein the width b1 of the mounting element (4) is less than/equal to the overall width a2 of the undeformed deformation element (6).

8. The motor vehicle key (1) in accordance with one of the claims 1 to 7, **characterised in that**, the key shank (2), in particular at a connecting end (3), has a width c1, wherein the width c1 of the key shank (2) is greater than the width a1 of the spaced-apart legs (10, 11) of the U-profile of the deformation element (6).

9. The motor vehicle key (1) in accordance with one of the claims 1 to 8, **characterised in that**, the deformation of the deformation element (6) can be executed by means of a sonotrode for the generation of ultrasonic waves, wherein the sonotrode can preferably be coupled to the key shank (2), in particular to one end of the key shank (2) .

10. The motor vehicle key (1) in accordance with one of the claims 1 to 9, **characterised in that**, the mounting recess (12, 13) is formed as a U-shape.

11. The motor vehicle key (1) in accordance with one of the claims 1 to 10, **characterised in that**, the key shank (2) is formed from metal, preferably from steel or nickel silver.

12. The motor vehicle key (1) in accordance with one of the claims 1 to 11, **characterised in that**, the mounting element (4) is formed from metal, preferably from a pressure die-casting.

13. The motor vehicle key (1) in accordance with one of the claims 1 to 12, **characterised in that**, the plastic element (6) is formed from polyamide.

14. The motor vehicle key (1) in accordance with one of the claims 1 to 13, **characterised in that**, the motor vehicle key (1) is designed as an emergency key, and is designed for arrangement in the motor vehicle radio key.

15. The motor vehicle key (1) in accordance with one of the claims 1 to 14, **characterised in that**, the mounting element (4) is designed as a cap element and/or as an actuating element for the motor vehicle radio key.

16. A method for the production of a motor vehicle key (1), **characterised by** the following method steps:
a) Insertion of a deformation element (6), in particular formed as a U-shape in cross-section, wherein the deformation element (6) is formed from plastic, into a mounting element (4) having at least one mounting recess (12, 13),
b) Coupling of a sonotrode, for the generation of ultrasonic waves, with a key shank (2) having at least one key shank recess (14, 15, 16, 17),
c) Insertion of the key shank (2) into the deformation element (6),
d) Vibrational excitation of the key shank (2) by means of the sonotrode,
e) Deformation of the deformation element (6) by means of the vibrating key shank (2) into the key shank recess (14, 15, 16, 17), and into the mounting recess (12, 13), so as to produce a force-fit and/or form-fit connection between the mounting element (4) and the key shank (2),
f) Cooling and solidification of the deformed deformation element (6) so as to produce a force-fit and/or form-fit connection between the mounting element (4) and the key shank (2) .

17. The method in accordance with claim 16, **characterised by** a motor vehicle key (1) in accordance with one of the claims 1 to 15.

## Revendications

1. Clé de véhicule automobile (1), notamment pour une clé à télécommande de véhicule automobile, comportant une tige de clé (2) et un élément de support (4), la tige de clé (2) étant disposée à l'intérieur de l'élément de support (2) et un élément de déformation (6) étant disposé entre l'élément de support (4) et la tige de clé (2), lequel est constitué pouvant être ultérieurement déformé,
l'élément de support (4) comportant au moins un évidement de support (12, 13) et la tige de clé (2) comportant au moins un évidement de tige de clé (14, 15, 16, 17), après la déformation de l'élément de déformation, l'élément de déformation (6) déformé étant disposé au moins en partie à l'intérieur de l'évidement de support (12, 13) et au moins en partie à l'intérieur de l'évidement de tige de clé (14, 15, 16, 17) et reliant la tige de clé (2) et l'élément de support (4) par conformité de force et/ou de forme, **caractérisée en ce que** l'élément de déformation (6) est constitué en matière plastique.

2. Clé de véhicule automobile (1) selon la revendication 1, **caractérisée en ce que** l'élément de support (4) comporte une cuvette (5) pour disposer l'élément de déformation (6).

3. Clé de véhicule automobile (1) selon la revendication 2, **caractérisée en ce que** l'élément de support (4) comporte un premier évidement de support (12) et un deuxième évidement de support (13), lesquels sont disposés l'un par rapport à l'autre à l'intérieur de la cuvette (5), de préférence opposés et/ou l'un à côté de l'autre.

4. Clé de véhicule automobile (1) selon au moins l'une quelconque des revendications 1 à 3, **caractérisée en ce que** l'élément de déformation (6) est constitué en section comme un profilé en U (9), le profilé en U (9) comprenant une première branche (10) et une deuxième branche (11), qui comportent une distance a1 l'une par rapport à l'autre.

5. Clé de véhicule automobile (1) selon au moins l'une quelconque des revendications 1 à 4, **caractérisée en ce que** l'élément de déformation (6) est constitué comme un contenant (7).

6. Clé de véhicule automobile (1) selon au moins l'une quelconque des revendications 1 à 5, **caractérisée en ce que** l'élément de déformation (6) est constitué comme une pièce d'insertion.

7. Clé de véhicule automobile (1) selon au moins l'une quelconque des revendications 1 à 6, **caractérisée en ce que** l'élément de déformation (6) comporte dans son état déformé une largeur totale a2 et l'élément de support (4), notamment la cuvette (5), comporte une largeur b1, la largeur b1 de l'élément de support (4) étant constitué plus petit que/égal à la largeur totale a2 de l'élément de déformation (6) déformé.

8. Clé de véhicule automobile (1) selon au moins l'une quelconque des revendications 1 à 7, **caractérisée en ce que** la tige de clé (2), notamment à une extrémité de liaison (3), comporte une largeur c1, la largeur c1 de la tige de clé (2) étant constituée plus grande que la largeur a1 des branches (10, 11) à distance l'une de l'autre du profilé en U de l'élément de déformation (6).

9. Clé de véhicule automobile (1) selon au moins l'une quelconque des revendications 1 à 8, **caractérisée en ce que** la déformation de l'élément de déformation (6) peut être exécutée au moyen d'une sonotrode pour produire des ondes ultrasonores, la sonotrode pouvant être couplée de préférence à la tige de clé (2) notamment à une extrémité de la tige de clé (2).

10. Clé de véhicule automobile (1) selon au moins l'une quelconque des revendications 1 à 9, **caractérisée en ce que** l'évidement de support (12, 13) est constitué en forme de U.

11. Clé de véhicule automobile (1) selon au moins l'une quelconque des revendications 1 à 10, **caractérisée en ce que** la tige de clé (2) est constituée en métal, de préférence en acier ou en maillechort.

12. Clé de véhicule automobile (1) selon au moins l'une quelconque des revendications 1 à 11, **caractérisée en ce que** l'élément de support (4) est constitué en métal, de préférence dans un moulage sous pression.

13. Clé de véhicule automobile (1) selon au moins l'une quelconque des revendications 1 à 12, **caractérisée en ce que** l'élément en matière plastique (6) est constitué de polyamide.

14. Clé de véhicule automobile (1) selon au moins l'une quelconque des revendications 1 à 13, **caractérisée en ce que** la clé de véhicule automobile (1) est constituée comme clé de secours et est constituée pour être placée dans la clé de télécommande de véhicule automobile.

15. Clé de véhicule automobile (1) selon au moins l'une quelconque des revendications 1 à 14, **caractérisée en ce que** l'élément de support (4) est constitué sous la forme d'un élément en capuchon et/ou d'un élément de commande pour la clé à télécommande de véhicule automobile.

16. Procédé de fabrication d'une clé de véhicule automobile (1), **caractérisé par** les étapes de procédé suivantes :
a) insertion d'un élément de déformation (6) notamment constitué en forme de U dans la section, l'élément de déformation (6) étant constitué en matière plastique, comportant dans un élément de support (4) au moins un évidement de support (12, 13),
b) couplage d'une sonotrode pour produire des ondes ultrasonores avec une tige de clé (2) comportant au moins un évidement de tige de clé (14, 15, 16, 17),
c) introduction de la tige de clé (2) dans l'élément de déformation (6),
d) excitation par vibration de la tige de clé (2) par la sonotrode,
e) déformation de l'élément de déformation (6) par la tige de clé (2) vibrante dans l'évidement de tige de clé (14, 15, 16, 17) et dans l'évidement de support (12, 13) pour réaliser une liaison par conformité de force et/ou de forme entre l'élément de support (4) et la tige de clé (2),
f) refroidissement et durcissement de l'élément de déformation (6) déformé pour réaliser une liaison par conformité de force et/ou de forme entre l'élément de support (4) et la tige de clé (2).

17. Procédé selon la revendication 16, **caractérisée par** une clé de véhicule automobile (1) selon l'une quelconque des revendications 1 à 15.
